**Europäisches Patentamt**

**European Patent Office**

**Office européen des brevets**

(11) Veröffentlichungsnummer: **0 248 943**
**B1**

(12) # EUROPÄISCHE PATENTSCHRIFT

(45) Veröffentlichungstag der Patentschrift:
08.08.90

(51) Int. Cl.⁵: **F16F 13/00, B60K 5/12**

(21) Anmeldenummer: **86115538.0**

(22) Anmeldetag: **08.11.86**

(54) Zweikammermotorlager.

(30) Priorität: **11.06.86 DE 3619685**

(43) Veröffentlichungstag der Anmeldung:
**16.12.87 Patentblatt 87/51**

(45) Bekanntmachung des Hinweises auf die Patenterteilung:
**08.08.90 Patentblatt 90/32**

(84) Benannte Vertragsstaaten:
**DE FR GB SE**

(56) Entgegenhaltungen:
**EP-A- 0 155 646**
**EP-A- 0 173 273**
**WO-A-86/03813**
**FR-A- 2 574 031**

**PATENT ABSTRACTS OF JAPAN, Band 10,**
**Nr. 218 (M-503)]2274], 30. Juli 1986; &**
**JP-A-61 55 426 (BRIDGESTONE CORP.) 19-03-1986**
**PATENT ABSTRACTS OF JAPAN, Band 8,**
**Nr. 238 (M-335 [1675], 31. Oktober 1984; &**
**JP-A-59 117 929 (TOYODA GOSEI K.K.) 07-07-1984**

Die Akte enthält technische Angaben, die nach dem
Eingang der Anmeldung eingereicht wurden und die
nicht in dieser Patentschrift enthalten sind.

(73) Patentinhaber: **Firma Carl Freudenberg, Höhnerweg 2-4,**
**D-6940 Weinheim/Bergstrasse(DE)**

(72) Erfinder: **Röhner, Gerhard, Giselherstrasse 1,**
**D-6944 Hemsbach(DE)**
Erfinder: **Idigkeit, Werner, Kastanienweg 10,**
**D-6940 Weinheim(DE)**
Erfinder: **Kurr, Klaus, Dr., Brunnengasse 9,**
**D-6940 Weinheim-Hohensachsen(DE)**

Anmerkung: Innerhalb von neun Monaten nach der Bekanntmachung des Hinweises auf die Erteilung des europäischen
Patents im Europäischen Patentblatt kann jedermann beim Europäischen Patentamt gegen das erteilte europäische Patent
Einspruch einlegen. Der Einspruch ist schriftlich einzureichen und zu begründen. Er gilt erst als eingelegt, wenn die
Einspruchsgebühr entrichtet worden ist (Art. 99(1) Europäisches Patentübereinkommen).

## Beschreibung

Die Erfindung betrifft ein Zweikammermotorlager, bei dem der Arbeits- und der Ausgleichsraum mit einer Flüssigkeit gefüllt und durch einen Drosselkanal mit einer Ein- und einer Auslaßöffnung verbunden sind, wobei die Ein- und die Auslaßöffnung dem Drosselkanal starr zugeordnet sind und dessen Anfang und Ende bestimmen, wobei in einem Abstand von der Einlaßöffnung wenigstens ein parallel zu der Auslaßöffnung mündender Querpaß vorgesehen ist und wobei der Querpaß durch ein signalbetätigbares Ventil verschließbar ist.

Ein solches Motorlager ist aus JP-A 6 155 426 bekannt. Die Betätigung des Ventils ist dabei während der bestimmungsgemäßen Verwendung vorgesehen, um eine Veränderung der Wirklänge des Drosselkanals herbeizuführen und eine dementsprechende Verlagerung der Dämpfungswirkung in einen anderen Frequenzbereich.

Die Güte der Dämpfungswirkung erfährt hierbei allerdings eine Beeinträchtigung.

Der Erfindung liegt die Aufgabe zugrunde, ein Zweikammermotorlager der eingangs genannten Art derart weiterzuentwickeln, daß bei allen während der praktischen Benutzung auftretenden Betriebszuständen die Erzielung optimaler Gebrauchseigenschaften gewährleistet ist.

Diese Aufgabe wird erfindungsgemäß bei einem Zweikammermotorlager der eingangs genannten Art dadurch gelöst, daß der Drosselkanal in jedem sich in Richtung der Auslaßöffnung an einen jeden Querpaß anschließenden Teilbereich einen Querschnitt von abgestuft verminderter Größe aufweist.

Bei Motorlagern der hier zur Diskussion stehenden Art ist es erwünscht, bei Einleitung niederfrequenter Schwingungen im Bereich von 3 bis 25 Hz eine möglichst gute Dämpfung und bei Einleitung hochfrequenter Schwingungen eine möglichst gute Isolierung zu erzielen.

Die Dämpfung der niederfrequenten Schwingungen beruht auf der Ausnutzung von Tilgereffekten, die durch die Hin- und Herbewegung der in dem Drosselkanal enthaltenen Flüssigkeitssäule zustande kommen. Die Flüssigkeitssäule ist dabei ihrem Volumen entsprechend von einer bestimmten Masse, welche federnd auf der gummielastischen Begrenzungswand des Arbeits- und/oder des Ausgleichsraumes abgestützt ist. Ihre Wirksamkeit ist dementsprechend schmalbandig auf einen engen Frequenzbereich beschränkt.

Erfindungsgemäß ist es nunmehr vorgesehen, der Masse einem ersten Teilabschnitt der Drosselöffnung enthaltenen Flüssigkeitssäule bedarfsweise durch das Verschließen von mindestens einem Querpaß eine Flüssigkeitssäule von abgestuft vermindertem Querschnitt hinzuzufügen, wodurch die Tilgerwirkung in einen niedrigeren Frequenzbereich verlagert wird. Die sich ergebende Dämpfungswirkung ist dementsprechend ebenfalls verlagert und läßt es zu, in einem weiteren Bereich eine optimale Dämpfungswirkung zu erzielen. Werden beide Bereiche dicht nebeneinandergelegt, so gehen die jeweils erzielten Dämpfungswirkungen nahezu unmerklich ineinander über, was gleichbedeutend ist mit der Erzielung einer breitbandigen Dämpfungswirkung von hoher Güte. Sie kann durch bedarfsweise Zuschaltung weiterer dämpfungswirksamer Längen des Drosselkanals von abgestuft vermindertem Querschnitt auf einen beliebig großen Frequenzbereich erweitert werden, wobei es von hervorzuhebender Bedeutung ist, daß die auf diese Weise erzielte Dämpfungswirkung nicht zu Lasten der bei Einleitung hoher Frequenzen von mehr als 30 Hz erwünschten Isolierung geht.

Bei dem für das Verschließen des Querpasses verwendeten Ventil handelt es sich wegen der großen Ansprechgeschwindigkeit und -genauigkeit zweckmäßig um ein elektrisch betätigbares Ventil. Dieses kann neben einem eigenen Antrieb mit einem eigenen Stellglied versehen sein, beispielsweise in Gestalt eines eigenen Ventilkükens. Eine entsprechende Ausführung bietet sich an in Fällen, in denen der Drosselkanal nur einen einzigen Querpaß aufweist.

In Fällen, in denen mehrere Querpässe parallel zueinander angeordnet sind, kann es unter Kostengesichtspunkten vorteilhafter sein, diesen in ihrer Gesamtheit ein einziges Stellglied in Gestalt eines Steuerschiebers zuzuordnen, der durch einen Schrittmotor verstellbar und bedarfsweise über eine zunehmende Anzahl von Mündungen der Querpässe bringbar ist. Für die grundsätzliche Funktion des erfindungsgemäßen Motorlagers ist es ohne Bedeutung, ob die im Patentbegehren angesprochene Einlaßöffnung dem Arbeits- oder dem Ausgleichsraum zugeordnet ist. Wichtig ist lediglich, daß sich der Querpaß parallel zu der Auslaßöffnung erstreckt und daß er hinsichtlich seiner Querschnittsauslegung hinreichend groß bemessen ist, um in geöffnetem Zustand des Ventils eine schwingungstechnische Abkopplung der in dem Drosselkanal zwischen Querpass und Auslaßöffnung enthaltenen Flüssigkeitssäule von der zwischen der Einlaßöffnung und dem Querpaß hin- und herschwingenden Flüssigkeitssäule zu gestatten. Eine solche Dimensionierung bereitet dem Fachmann keine Schwierigkeiten. Bei geschlossenem Ventil bilden beide Flüssigkeitssäulen eine in sich geschlossene Trägheitsmasse, die größer ist als bei geöffnetem Ventil und folglich eine niedrigere Resonanzfrequenz besitzt. Die Dämpfungswirksamkeit ist entsprechend verlagert. Sie ist bei dem erfindungsgemäßen Motorlager folglich durch die Signalbetätigung des Ventils steuerbar, was es erlaubt, in mehreren Frequenzbereichen eine optimale Dämpfungswirkung zu erzielen. Diese können dicht benachbart sein, so daß die Dämpfungswirksamkeiten ineinander übergehen und breitbandig wirksam sind. Die Isolierung hochfrequenter Schwingungen wird hiervon nicht berührt und kann daher unter Anwendung aller einschlägig bekannten Mittel erfolgen.

Das für die Betätigung des Ventiles oder der Ventile erforderliche Signal kann einer frei programmierbaren Rechnereinheit entnommen werden, in welche eine oder mehrere das Schwingungsverhalten des Motors in repräsentativer Weise wiedergebende Führungsgrößen eingegeben werden, beispielsweise die Motordrehzahl, die Beschleunigung, die Abbremsung und/oder der jeweils eingelegte Gang. Die diesbezüglichen Möglichkeiten sind indessen dem Durchschnittsfachmann bekannt, weshalb es dazu in der vorliegenden Anmeldung keiner weiteren Erläuterung bedarf.

Eine beispielhafte Ausführung des erfindungsgemäßen Motorlagers ist in der als Anlage beigefügten Zeichnung dargestellt. Es zeigen:

Fig. 1 ein Zweikammermotorlager der erfindungsgemäß vorgeschlagenen Art in längsgeschnittener Darstellung;

Fig. 2 den Bereich des Drosselkanals eines Motorlagers nach Fig. 1 in einer Ansicht von oben;

Fig. 3 den Bereich des Drosselkanals eines Motorlagers nach Fig. 1 in vergrößerter Wiedergabe und längsgeschnittner Darstellung;

Fig. 4 und 5 andere Ausführungen und Zuordnungsmöglichkeiten von Ventilen zu einem Drosselkanal, welcher mit mehreren Querpässen versehen ist.

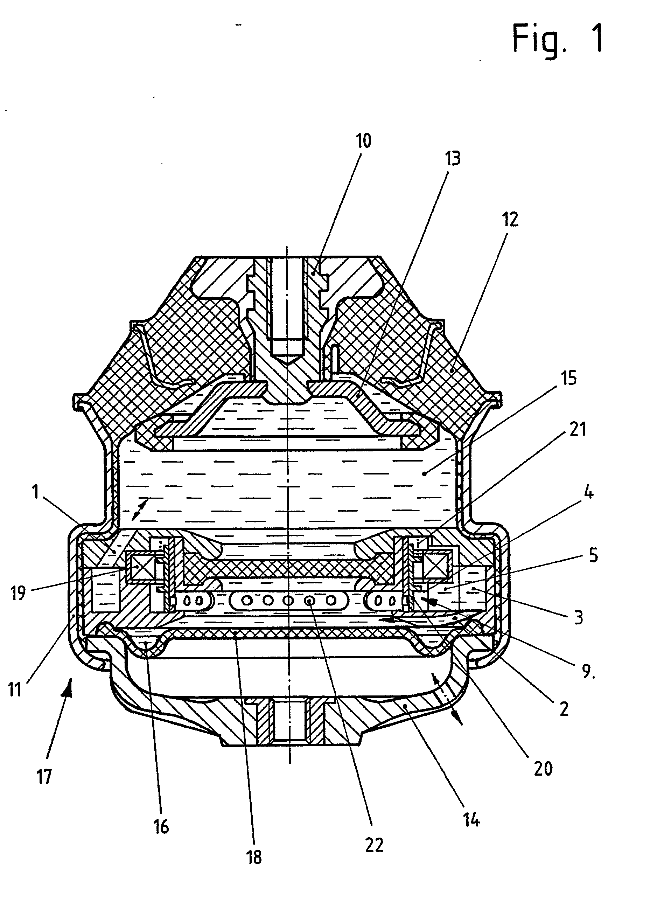

Das in Fig. 1 gezeigte Motorlager umfaßt das Auflager 10 und das Traglager 11, die durch die hohlkegelig ausgebildete Tragfeder 12 aus Gummi verbunden sind. Das Traglager 11 umschließt in seinem unteren Teil die starr zugeordnete Trennwand 17, die zwischen dem Arbeitsraum 15 und dem Ausgleichsraum 16 des Motorlagers angeordnet ist. Der Ausgleichsraum 16 wird unterseits durch die Topfmembrane 18 begrenzt, welche bei zunehmender Einspeisung von aus dem Arbeitsraum 15 verdrängtem Flüssigkeitsvolumen in Richtung der Bodenplatte 14 auszuweichen vermag. Die Bodenplatte 14 ist ebenfalls relativ unbeweglich an dem Traglager 11 festgelegt. Das Zweikammermotorlager ist insgesamt von rotationssymmetrischer Gestalt, wodurch eine leichte Unterbringung im Motorraum eines Kraftfahrzeuges möglich ist. Die Festlegung erfolgt durch gegenseitige Verschraubung des Auflagers 10 mit dem Motor und der Bodenplatte 14 mit der tragenden Karosserie.

Ein im Inneren des Arbeitsraumes 15 angeordneter Endanschlag 13 dient als Sicherung gegen unzulässig große Auseinanderbewegungen des Auflagers 10 in bezug auf das Traglager 11. Er hat bei belastetem Motorlager einen Abstand von der Tragfeder 12.

Der Arbeitsraum 15 und der Ausgleichsraum 16 des gezeigten Zweikammermotorlagers sind durch den Drosselkanal 3 verbunden, der durch die Einlaßöffnung 1 mit dem Arbeitsraum 15 und durch die Auslaßöffnung 2 mit dem Ausgleichsraum 16 verbunden ist. Der Arbeitsraum 15, der Drosselkanal 3 und der Ausgleichsraum 16 sind vollständig mit einer inkompressiblen Flüssigkeit gefüllt, im allgemeinen mit einer Mischung aus Glykol und Wasser.

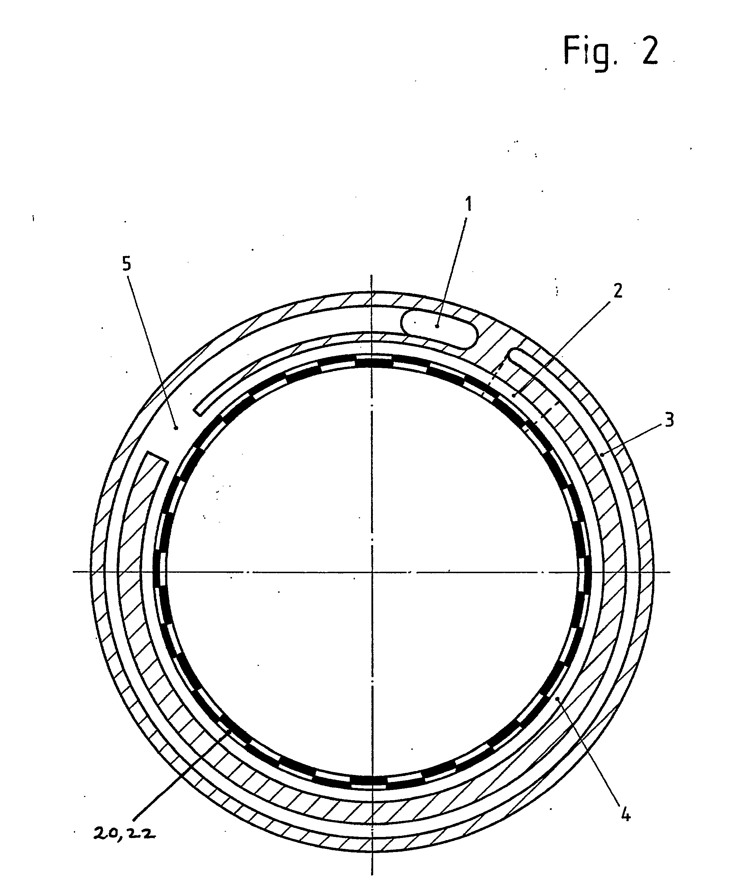

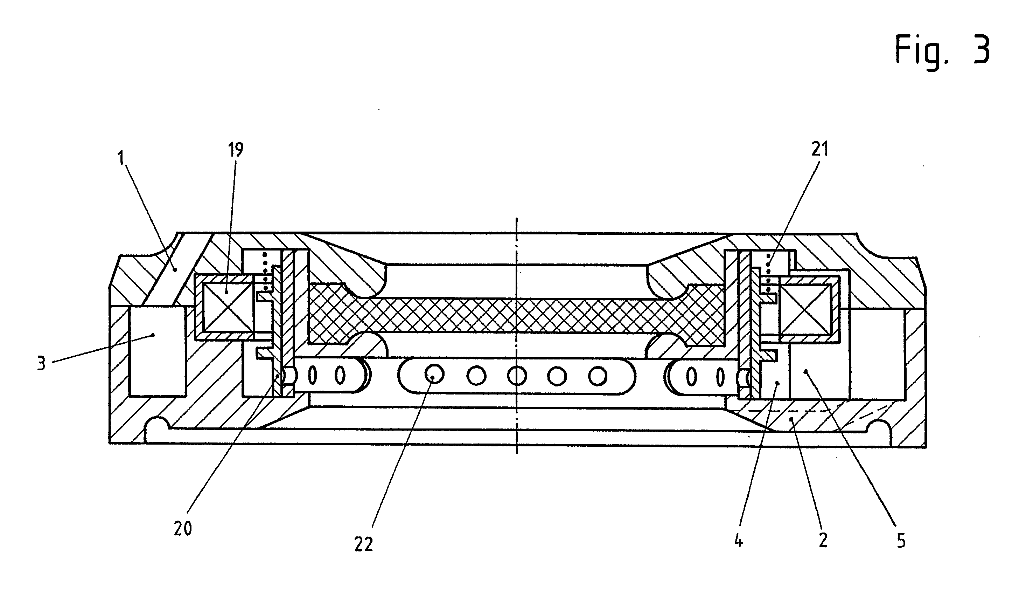

Der Drosselkanal 3 bei der gezeigten Ausführung eines Zweikammermotorlagers in dem dem Traglager 11 starr zugeordneten Teil der Trennwand 17 angeordnet. Er ist von rechteckigem Profil und umschließt den inneren Teil der Trennwand mit kreisförmigem Verlauf, wobei in einem Abstand von der Einlaßöffnung 1 und von der Auslaßöffnung 2 ein Querpaß 5 vorgesehen ist. Der Querpaß 5 ist durch ein signalbetätigbares Ventil verschließbar und steht in geöffnetem Zustand des Ventils in einer direkten Verbindung mit dem Ausgleichsraum 16. Die über die Einlaßöffnung 1 in den Drosselkanal 3 eintretende Flüssigkeitsmenge durchströmt daher bei geöffnetem Ventil den Drosselkanal 3 nicht auf ihrer gesamten Länge, sondern nur auf der Länge, die einerseits durch die Einlaßöffnung 1 und andererseits durch den Querpaß 5 begrenzt ist. Die Frequenz der durch Tilgerwirkungen bedämpften Schwingungen entspricht folglich der Frequenz, in der die in dem genannten Bereich enthaltene Flüssigkeitsmasse durch die Ausbauchungselastizität der Tragfeder 12 in eine Resonanzschwingung versetzbar ist. Es ist offensichtlich, daß die in dem Drosselkanal hin- und herschwingende Flüssigkeitssäule durch das Schließen des signalbetätigbaren Ventils 9 eine Vergrößerung erfährt, die zu einer entsprechenden Vergrößerung der hin- und herschwingenden Flüssigkeitsmasse und damit zu einer Absenkung der Resonanzfrequenz derselben führt. Die Dämpfungswirksamkeit ist entsprechend verlagert und somit durch die Betätigung des Ventils 9 steuerbar. Das signalbetätigbare Ventil 9 ist bei der Ausführung nach Fig. 1 als Schieberventil ausgebildet, bei dem der zylindrische, aus Weicheisen bestehende Steuerschieber 20 radial innerhalb einer Magnetspule 19 angeordnet ist. Zwischen dem Steuerschieber 20 und dem Querpaß 5 ist ein ringförmiger Freiraum 4 vorgesehen, in welchem die gegebenenfalls aus dem Querpaß austretende Flüssigkeitsmenge umgelenkt und auf eine große Anzahl von Austrittsöffnungen 22 geringen Querschnitts verteilt wird. Zur Freigabe des Durchflußquerschnittes des Querpasses 5 genügt hierdurch ein geringer Hub des Steuerschiebers 20. Der Steuerschieber 20 ist bei nicht erregter Magnetspule 19 durch die Kraft der Druckfeder 21 axial gegenüber der Magnetspule 19 verlagert und bewirkt ein Verschließen der auf dem Umfang verteilten Austrittsöffnungen 22 des Querpasses 5 (Fig. 2, 3). Die bei einer Einfederung des Auflagers 10 über die Einlaßöffnung 1 in den Drosselkanal 3 eintretende Flüssigkeit vermag dieselbe daher erst an deren Ende über die Auslaßöffnung 2 in Richtung des Ausgleichsraumes 16 zu verlassen und nimmt bei einer Ausfederung des Auflagers 10 denselben Weg in umgekehrter Richtung. Die insgesamt in dem Drosselkanal 3 enthaltene Flüssigkeitsmasse bestimmt dementsprechend in Verbindung mit der Ausbauchungselastizität der Tragfeder 12 die Frequenzlage der bedämpften Schwingung.

Eine Erregung der Magnetspule 19 bewirkt eine axiale Verschiebung des Stellschiebers 20 gegen die Kraft der Druckfeder 21, wodurch die Auslaßöffnungen 22 des Querpasses 5 in Richtung des Ausgleichsraums 16 freigegeben werden. Die bei einer Einfederung des Auflagers 10 über die Einlaßöffnung in den Drosselkanal 3 eintretende Flüssigkeitsmenge ist dadurch nicht mehr gezwungen, den Drosselkanal 3 auf dessen gesamter Länge zu durchströmen, sondern sie verläßt dieselbe bereits nach kurzer Zeit über den Querpaß 5 und dessen Auslaßöffnungen 22, wobei sich bei einer Ausfederung des Auflagers 10 lediglich eine Richtungsumkehr ergibt. Die auf Tilgereffekten beruhende Dämpfungswirkung ist daher in einem entsprechend höherliegenden Frequenzbereich wirksam.

Die Trennwand 17 des Motorlagers nach Fig. 1 umschließt in ihrem mittleren Teil eine kreisförmige, im Bereich des Außenumfanges festgehaltene, flexible Membran. Diese vermag die vom Motor erregten, hochfrequenten Schwingungen oberhalb von 30 Hz durch ihre Nachgiebigkeit zu kompensieren und verhindert auf diese Weise das Auftreten von Druckänderungen in dem Arbeitsraum 15, die durch entsprechende Schwingungen verursacht sind. Entsprechende Schwingungen sind dadurch im Traglager 11 nicht feststellbar und werden ausgezeichnet isoliert.

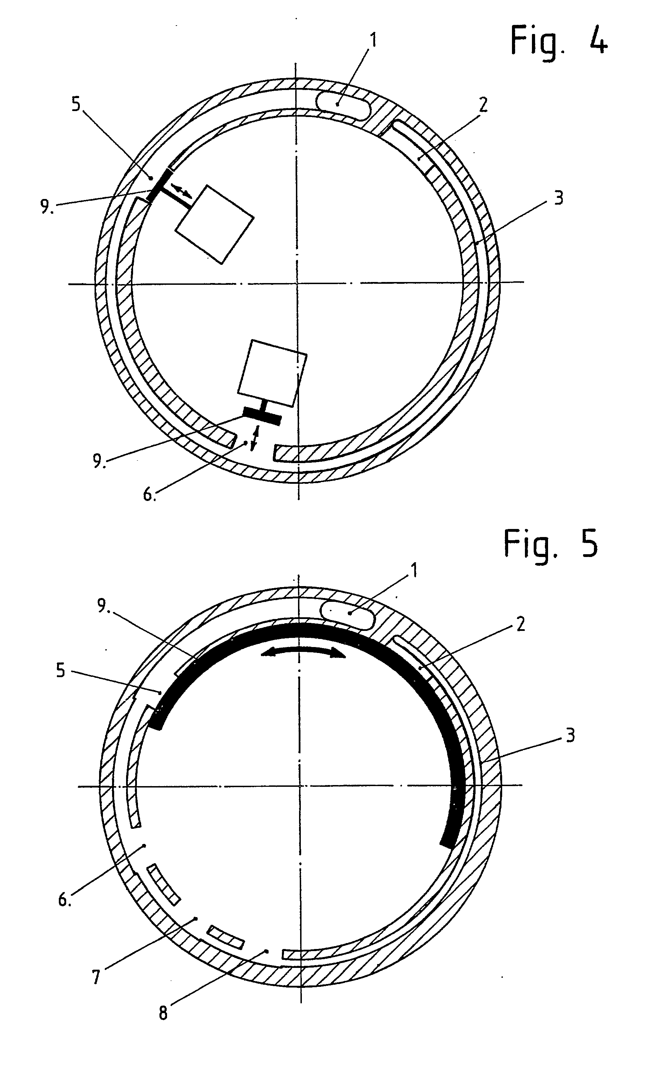

Die Fig. 4 und 5 zeigen zwei verschiedene Ausführungsmöglichkeiten hinsichtlich der Gestaltung der Drosselöffnung, von Querpässen und Ventilen. Im erstgenannten Fall sind zwischen der Ein- und der Auslaßöffnung 1, 2 des Drosselkanals 3 zwei Querpässe 5, 6 angeordnet, im letztgenannten Falle vier Querpässe 5, 6, 7, 8. Die Querschnitte des Drosselkanals 3 sind in jedem sich an die Querpässe in Richtung der Auslaßöffnung anschließenden Teilbereich abgestuft in ihrer Größe vermindert.

Den Querpässen 5, 6 sind bei der Ausführung nach Figur 4 zwei elektromagnetisch betätigte Ventile 9 zugeordnet, die unabhängig voneinander betätigbar sind und jeweils einen eigenen Antrieb haben.

Bei der Ausführung nach Fig. 5 ist den Mündungen aller Querpässe 5, 6, 7, 8 ein durch einen nicht dargestellten Schrittmotor angetriebener zentraler Steuerschieber eines Ventils 9 zugeordnet. Dieser kann durch relative Verdrehung über eine zunehmende Anzahl von Mündungen geschoben werden, was zu einer Blockierung der Durchlässigkeit der entsprechenden Querpässe führt.

## Patentansprüche

1. Zweikammermotorlager, bei dem der Arbeits- und der Ausgleichsraum (15, 16) mit einer Flüssigkeit gefüllt und durch einen Drosselkanal (3) mit einer Ein- und einer Auslaßöffnung (1, 2) verbunden sind, wobei die Ein- und die Auslaßöffnung (1, 2) dem Drosselkanal (3) starr zugeordnet sind und dessen Anfang und Ende bestimmen, wobei in einem Abstand von der Einlaßöffnung (1) wenigstens ein parallel zu der Auslaßöffnung (2) mündender Querpaß (5, 6, 7, 8) vorgesehen ist und wobei der Querpaß (5, 6, 7, 8) durch ein signalbetätigbares Ventil (9) verschließbar ist, dadurch gekennzeichnet, daß der Drosselkanal (3) in jedem sich in Richtung der Auslaßöffnung (2) an einen jeden Querpaß (5, 6, 7, 8) anschließenden Teilbereich einen Querschnitt von abgestuft verminderter Größe aufweist.

2. Zweikammermotorlager nach Anspruch 1 dadurch gekennzeichnet, daß mehrere durch Ventile (9) verschließbare Querpässe (5, 6, 7, 8) vorgesehen sind und daß die Ventile (9) unabhängig voneinander betätigbar sind und jeweils einen eigenen Antrieb haben.

## Claims

1. A twin-space motor support, in which the working and the compensating space (15, 16) are filled with a liquid and are connected by a throttle passage (3) to an inlet and an outlet opening (1, 2), the inlet and the outlet opening (1, 2) being associated rigidly with the throttle passage (3) and determining its beginning and end, at least one transverse pass (5, 6, 7, 8), which opens out parallel to the outlet opening (2), being provided at a distance from the inlet opening (1), and the transverse pass (5, 6, 7, 8) being able to be closed by a valve (9) actuatable by signal, characterized in that the throttle passage (3) has a cross-section of gradually reduced size in each partial region adjoining each transverse pass (5, 6, 7, 8) in the direction of the outlet opening (2).

2. A twin-space motor support according to claim 1, characterized in that a plurality of transverse passes (5, 6, 7, 8), which can be closed by valves (9), is provided, and in that the valves (9) can be actuated independently of one another, each having their own drive.

## Revendications

1. Palier de moteur à deux chambres dans lequel l'enceinte de travail (15) et l'enceinte d'équilibrage (16) sont remplies d'un liquide et sont connectées par un canal de réglage (3) à un orifice d'entrée (1) et à un orifice de sortie (2) tandis que les orifices d'entrée et de sortie (1, 2) correspondent de manière rigide au canal de réglage (3) et déterminent le début et la fin de celui-ci, tandis qu'au moins un passage transversal (5, 6, 7, 8) est prévu à une certaine distance de l'orifice d'entrée (1) et débouchant parallèlement à l'orifice de sortie (2) et tandis que le passage transversal (5, 6, 7, 8) peut être fermé par une vanne (9) pouvant être commandée par signal, caractérisé en ce que le canal de réglage (3) présente une section de grandeur diminuant par gradins à chaque zone partielle voisine de chaque passage transversal (5, 6, 7, 8) en direction de l'orifice de sortie (2).

2. Palier de moteur à deux chambres selon la revendication 1, caractérisé en ce qu'il est prévu plusieurs passages transversaux (5, 6, 7, 8) pouvant être fermés par des vannes (9) et que les vannes (9) peuvent être commandées indépendamment les unes des autres et possèdent chacune leur propre commande.

Fig. 1

Fig. 2

Fig. 3

EP 0 248 943 B1

Fig. 4

Fig. 5